(19) Europäisches Patentamt
European Patent Office
Office européen des brevets

(11) Publication number: 0 118 632
A1

(12) # EUROPEAN PATENT APPLICATION

(21) Application number: 83301389.9

(22) Date of filing: 14.03.83

(51) Int. Cl.³: C 01 B 33/28
B 01 J 29/04

(43) Date of publication of application:
19.09.84 Bulletin 84/38

(84) Designated Contracting States:
BE DE FR GB IT NL

(71) Applicant: MOBIL OIL CORPORATION
150 East 42nd Street
New York New York 10017(US)

(72) Inventor: Kuehl, Guenter Hinrich
1956 Cardinal Lake Drive
Cherry Hill New Jersey 08003(US)

(74) Representative: West, Alan Harry et al,
Mobil Court 3 Clements Inn
London WC2A 2EB(GB)

(54) **Crystalline materials and process for their manufacture.**

(57) A crystalline material comprises a metallosilicate core and an enveloping metallosilicate shell of the same crystal structure but different chemical composition, and is formed by conventional zeolite synthesis techniques by crystallizing the shell from an appropriate reaction mixture onto crystals of the core, the latter having been preformed or formed *in situ*. Such materials are useful as hydrocarbon conversion catalysts and, especially when they have the ZSM-12 structure, as shale oil upgrading catalysts.

EP 0 118 632 A1

Croydon Printing Company Ltd.

# CRYSTALLINE MATERIALS AND PROCESS FOR THEIR MANUFACTURE

This invention relates to crystalline materials and to a process for their manufacture.

Reactions to form numerous zeolites are known in the art. Some prominent examples of such zeolites are ZSM-5, ZSM-11, ZSM-12, ZSM-23, ZSM-35 and ZSM-38.

U.S. Patent 4,112,056 describes a method for making a zeolite having a high silica/alumina mole ratio comprising adding a source of aluminum ions to a silica-rich amorphous reaction medium at such a rate that the concentration of aluminum ions in the amorphous phase is maintained at a steady state.

U.S. Patents 4,148,713 and 4,203,869 describe a crystalline aluminosilicate zeolite composite having an outer shell of alumina-free silicate of the same crystal structure as the aluminosilicate constituting the core of the composite. Such materials are prepared by crystallizing the shell from a silica-rich reaction mixture onto a seed crystal of the core aluminosilicate.

Similar materials are described in U.S. Patent 4,088,605 in which a zeolite having an aluminum-free outer shell of the same crystal structure as the inner core is crystallized from a reaction mixture from which aluminum is substantially eliminated during crystallization. More recently, there have been described composite zeolites in which a modified-silica zeolite, preferably containing aluminum, gallium or boron, overlies a silica core (EP-A1-00 55 044). Such materials are formed by crystallizing the modified-silica zeolite onto preformed silica particles.

More recently still, in GB-A-2,097,374, there have been described materials comprising a core of 5 to 6.5 Angstrom pore size, substantially alumina-free crystalline silicate within an outer shell of aluminosilicate of the same crystal structure. Those materials are prepared by crystallizing the silicate core from an alumina-free medium, adding a source of alumina to the medium, and completing crystallization.

According to the invention, there is provided a crystalline material having a constraint index from 0.4 to 12 comprising a core of a crystalline metallosilicate having a silica/trivalent metal oxide mole ratio greater than 12 and when the trivalent metal therein is aluminum, less than 200, enveloped by a shell of an isocrystalline metallosilicate having a composition differing from that of the core and when the shell is an aluminosilicate, having a silica/trivalent metal oxide mole ratio lower than that of the core.

The "constraint index" is a critical factor in the definition of the materials of the invention. This parameter is a measure of the pore size of a material in terms of its ability to sorb normal paraffins and to present constrained access to molecules of larger cross-section. A detailed discussion of the significance of this parameter and the method of its determination may be found in Journal of Catalysis, 67, 1, January 1981.

From the above definition of the materials according to the invention, it will be apparent that when the trivalent metal of the metallosilicate constituting the shell is not aluminum, then the silica/trivalent metal oxide mole ratio of the shell can be higher or lower than the silica/trivalent metal oxide mole ratio of the core.

It will be appreciated that, in general terms, the materials of the invention can exist with four different compositional core/shell combinations, that is to say

(i) both core and shell are constituted by aluminosilicates (in which case the restrictions specified above will apply, i.e. the core will have 12 less than $SiO_2/Al_2O_3$ less than 200 and the shell will have $SiO_2/Al_2O_3$ lower than that of the core;

(ii) both core and shell are constituted by metallosilicates other than aluminosilicates;

(iii) the core is constituted by an aluminosilicate (in which case it will have 12 less than $SiO_2/Al_2O_3$ less than 200) and the shell is constituted by a metallosilicate other than an aluminosilicate; and

(iv) the core is constituted by a metallosilicate other than an aluminosilicate and the shell is constituted by an aluminosilicate (in which case the shell will have $SiO_2/Al_2O_3$ lower than the silica/trivalent metal oxide mole ratio of the core).

The crystalline materials of the invention can be prepared by conventional techniques used for the preparation of known metallosilicate materials. Thus, the crystalline material constituting the shell can be crystallized onto crystals of the material constituting the core from a reaction mixture containing suitable amounts and proportions of sources of the various constituents of the shell material. According to a variation of such a procedure, the core material may itself be crystallized in situ and the composition of the reaction mixture altered after crystals of the core material have formed so that the desired shell material will then crystallize onto the crystals of core material; such a technique may not, however, be appropriate to all core/shell combinations of the invention.

The reaction mixture from which the shell material is crystallized will generally contain sources of silica, trivalent metal oxide ($L_2O_3$), a cation (M) of valence n and water and will suitably have a composition, expressed in terms of mole ratios of constituent oxides, of

| | broad | preferred |
|---|---|---|
| $SiO_2/L_2O_3$ | greater than 12 | greater than 25 |
| $M_{\frac{2}{n}}O/SiO_2$ | 0.2-2.0 | 0.3-1.8 |
| $H_2O/OH^-$ | 50-400 | 70-350 |
| $OH^-/SiO_2$ | 0.1-0.55 | 0.2-0.45 |

Such a reaction mixture may be prepared from materials that supply the appropriate oxides. Such materials include sodium silicate, silica hydrosol, silica gel, silicic acid, sodium hydroxide, sodium chloride, aluminum sulfate, sodium aluminate, alumina, aluminum metal, boric acid, and any organonitrogen compounds or precursors thereof that may be necessary or desirable for proper crystallization of the required metallosilicate. The reaction mixture should be maintained at an elevated temperature under atmospheric, autogenous or elevated pressure, and can be allowed to remain static or can be agitated, until crystals of the metallosilicate have formed on the crystals of the metallosilicate core material present in the reaction mixture. The precise constitution of the reaction mixture and conditions of crystallization will depend to a large extent on the structure and constitution of the desired metallosilicate shell but will be apparent to those skilled in the art or can be readily ascertained.

Where the shell is crystallized onto crystals of the core material that have been prepared separately, such crystals may simply be added as such to the reaction mixture. Where the crystals of the core material are formed in situ, the reaction mixture having the composition appropriate for crystallization of the shell material is simply formed by suitable addition of sources of

relevant oxides to the reaction mixture remaining after the core material has crystallized. For example, where both core and shell are alumino-silicates, a suitable quantity of a source of alumina, such as sodium aluminate, may be added to the reaction mixture after 20 to 90%, especially about 50%, crystallization has been achieved, so that a shell of lower $SiO_2/Al_2O_3$ will then crystallize on the already crystallized core.

The cores of the materials of the invention are crystalline metallosilicates that can be identified by their compositional formulae in terms of mole ratios of oxides, as

$$\text{less than or equal to } 1.3M_{\frac{2}{n}}O : L_2O_3 : xSiO_2 : zH_2O$$

in which M is a cation of valence $\underline{n}$, L is a trivalent metal from Groups III to VIII of the Periodic Table (for example, aluminum, gallium, boron, chromium and iron), $\underline{x}$ is greater than 12 and, when L is aluminum, less than 200, and $\underline{z}$ is 0 to 2,000.

Preferably, however (for the reasons that are described below), the core is an aluminosilicate zeolite having a silica/alumina mole ratio from 12 to 200. In such a case, the cation M in the compositional formula given above will, when the zeolite is in its as-synthesized form, preferably be an alkali metal cation, for example sodium, and optionally also an organonitrogen cation, especailly an alkylammonium cation the alkyl groups of which preferably each have from 1 to 5 carbon atoms.

A preferred aluminosilicate zeolite core of the crystalline materials of the invention is ZSM-12; other known zeolites that may be used in this respect are ZSM-5, ZSM-11, ZSM-23, ZSM-35 and ZSM-38. These zeolites, their methods of preparation and their characterization in terms of their x-ray diffraction data are fully described in U.S. Patents 3,832,449 (ZSM-12); 3,702,886 (ZSM-5); 3,709,979 (ZSM-11); 4,016,245 (ZSM-23); 4,046,859 (ZSM-35); and 4,076,842 (ZSM-38) and in numerous other publications.

The metallosilicate shell that envelopes the metallosilicate core is required to be isocrystalline with the core. Thus, a metallosilicate shell crystallized onto a core having the crystalline structure of ZSM-12, for example, is required to exhibit the crystalline structure of ZSM-12; such isocrystalline growth can be achieved by the method of the invention to obtain shells having unusual or otherwise difficultly obtainable or may be even hitherto unknown structures for the shell composition concerned. Of course, in crystallizing the shell onto the core material, it is necessary to select a composition for the reaction mixture that is compatible with the desired composition and structure of the required shell material, but such factors are well known to those skilled in the art of zeolite synthesis.

The shell material that is crystallized onto the core material, the latter preferably being an aluminosilicate zeolite, more preferably ZSM-5, ZSM-11, ZSM-23, ZSM-35 or ZSM-38 and especially ZSM-12, may also be an aluminosilicate or may be a metallosilicate other than an aluminosilicate, and the method by which crystallization is achieved will depend to some extent upon the composition of the shell. Thus, it may not be possible or it may not be straightforward to crystallize a borosilicate shell onto an aluminosilicate core by simply altering the composition of the reaction mixture after crystals of the aluminosilicate core material have formed (for example, it may not be possible to eliminate sufficient aluminum from the reaction mixture to ensure that sufficient boron is incorporated into the desired borosilicate shell). Conversely, when the shell is an aluminosilicate, it will usually be possible simply to add additional source of alumina to the reaction mixture after crystallization of the aluminosilicate core material.

It is well known in the art of zeolite synthesis that certain high-silica zeolite materials crystallize readily from reaction mixtures that are particularly rich in silica, i.e.

reaction mixtures that have high $SiO_2/L_2O_3$ molar ratios. It is not evident, however, that the converse is not always the case, i.e. zeolites of certain structures (both crystalline and compositional) cannot readily be obtained at low $SiO_2/L_2O_3$ molar ratios. Nevertheless, according to the invention, using a metallosilicate seed or "host" crystal upon which the shell material can crystallize, isocrystalline materials of certain difficultly obtainable compositions can be formed.

When both the core and shell are constituted by aluminosilicates, the shell will have a lower $SiO_2/Al_2O_3$ mole ratio than the core i.e. the shell will contain a greater proportion of alumina than the core. Such materials in which the shell has a particularly low $SiO_2/Al_2O_3$ molar ratio are advantageous for certain purposes and may be synthesized with relative simplicity according to the method of the invention. However, crystallization of an isocrystalline shell onto the core material is greatly assisted if $SiO_2/Al_2O_3$ of the shell to be formed is close to that of the core, which will generally mean that $SiO_2/Al_2O_3$ of the core material should itself be as low as possible.

Another feature of the invention is that it permits the formation of shells that have different acid strengths to those of the core materials. Thus, for example, in a material constituted by an aluminosilicate core and an enveloping shell of isocrystalline borosilicate or ferrosilicate, $SiO_2/Al_2O_3$ of the core and $SiO_2/L_2O_3$ of the shell may be similar or $SiO_2/L_2O_3$ of the shell may even be lower than $SiO_2/Al_2O_3$ of the core, but since the acid strength of the material generated by the metal (Al or L) decreases in the sequence

$$Al > Ga > Fe > B,$$

the shell will generally have the lower acid strength.

The crystalline materials of the invention, in common with more conventional crystalline metallosilicates, are capable of exhibiting a wide range of catalytic properties after activation.

Such activation is necessary when crystallization has been carried out in the presence of organic cations and can be achieved by conventional activation procedures involving, for example, calcination in an inert atmosphere at up to 540°C for up to 1 hour followed by base-exchange with an ammonium salt and recalcination in air. The resulting hydrogen form of the metallosilicate can then, if desired, be base exchanged with any one or more of a wide variety of metal cations, for example nickel, copper, zinc, palladium, calcium, rhenium, magnesium, silver, platinum and manganese, to confer on the metallosilicate the properties required for the particular reaction to be catalyzed.

The crystalline materials of the invention, before or after activation, may be incorporated in a matrix. Such matrix materials are useful as binders and impart great resistance to the severe temperature and pressure conditions encountered in many catalytic processes.

Useful matrix materials in this respect include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or after being subjected to calcination, acid treatment or chemical modification.

Alternatively, the metallosilicates may be composited with a porous matrix material, such as alumina, silica-alumina, silica-magnesia, silica-zirconia, silica-thoria, silica-beryllia,

and silica-titania, as well as ternary compositions such as silica-alumina-thoria, silica-alumina-zirconia, silica-alumina-magnesia and silica-magnesia-zirconia; these matrix materials may be in the form of cogels. The relative proportions of metallosilicate component and matrix material, on an anhydrous basis, may vary widely, with the metallosilicate content being from 1 to 99 percent by weight and more usually from 5 to 80 percent by weight of the dry composite.

The catalytic properties of the crystalline materials of the invention will depend not only on the presence or absence of any particular cationic species associated with the metallosilicate, but also upon the crystalline structure of the metallosilicate; indeed, the catalytic properties will, in general, tend closely to follow those of the core material with which the shell material is isocrystalline (except when the shell contains a higher proportion of alumina than the core). Although the material constituting the core will be expected to contribute little in the way of catalytic activity in such reactions as the cracking of relatively large organic molecules that are less capable of diffusing into and through the pore structure of the shell, reactions in which smaller molecules such as paraffin waxes are present will be influenced by the core material. The crystalline materials of the invention, however, find utility as hydrocarbon conversion catalysts and especially in shale oil conversion, particularly in converting the 450°C+ fraction of shale oil into a product containing from 50 to 95% of a 200 to 340°C fraction. Especially useful in this respect are those crystalline materials having the crystal structure of ZSM-12.

An especially preferred material according to the invention is constituted by an aluminosilicate core enveloped by an isocrystalline borosilicate shell. Since the borosilicate shell of

this material has a low acid strength, large nitrogenous molecules are readily desorbed intact from the shell rather than being cracked; this, in turn, greatly reduces the amount of coke build-up that occurs in the shell and penetration of the shell by such large nitrogenous molecules that will poison the aluminosilicate core. A catalyst comprising such a material will therefore be expected to exhibit the catalytic properties of the aluminosilicate core but to have a longer catalytic life than the aluminosilicate core itself because of the enveloping protective shell of borosilicate, when used in hydrocarbon conversion processes in which the hydrocarbon feed contains large nitrogenous molecules.

The following Examples illustrate the invention.

EXAMPLE 1

A solution of 80 g of $Al(NO_3)_3.9H_2O$, 1410 g of 50 percent methyltriethylammonium chloride and 250 g of NaOH (97.6 percent) in 11 kg $H_2O$ was placed in an autoclave. 2,400 g Hi-Sil (precipitated $SiO_2$ containing 90 percent by weight of solids) was added at 30 rpm stirring. The mixture was gel-whipped for one hour at ambient temperature at a stirring rate of 250 rpm, then aged 24 hours at 50°C at 30 rpm. Finally, the mixture was heated to 160°C with 90 rpm stirring. After 90 hours at this temperature, a crystalline solid was separated from the mother liquor, washed with water and dried at 120°C.

The crystalline product had the X-ray diffraction pattern of ZSM-12. Crystallinity was 105 percent compared to a reference sample. Its sorption capacities were, g/100 g of solid:

| | |
|---|---|
| Cyclohexane, 2.7 kPa | 7.7 |
| n-Hexane, 2.7 kPa | 6.7 |
| Water, 1.6 kPa | 6.0 |

The $SiO_2/Al_2O_3$ molar ratio was 124 and the material contained 1.32 percent $Al_2O_3$, based on ignited weight.

EXAMPLE 2

A reaction mixture was prepared as described in Example 1, but was aged for 75 hours at 50°C, then crystallized at 160°C. After 20 hours at 160°C the crystallinity was 55 percent, compared to a reference sample. At that time, a solution of 40 g of sodium aluminate in 100 g of water was added. Crystallization was complete after 67 hours at 160°C. The solid was separated from the mother liquor, washed with water and dried at 120°C.

The product had the X-ray diffraction pattern of ZSM-12 and had a crystallinity of 105 percent compared to a reference sample. Its sorption capacities were g/100 g of solids:

| | |
|---|---|
| Cyclohexane, 2.7 kPa | 7.5 |
| n-Hexane, 2.7 kPa | 6.8 |
| Water, 1.6 kPa | 6.7 |

The material contained 2.1 percent $Al_2O_3$, based on ignited weight and the $SiO_2/Al_2O_3$ molar ratio was 77.

EXAMPLE 3

The product of a crystallization similar to that of Example 1 had a $SiO_2/Al_2O_3$ molar ratio of 123. A sample of it was calcined in a tube furnace in an ammonia stream to 600°C and held at that temperature for one hour. The sample was then cooled to ambient temperature in an ammonia atmosphere. The material was then exchanged three times, each with 45 ml of 0.1 N $NH_4Cl$/0.1 N $NH_4OH$ solution at 70°C in a sealed polypropylene jar for one hour. Finally, the sample was filtered, washed chloride-free with water at room temperature and dried at the same temperature. The ion-exchanged material contained less than 0.01 weight percent Na. In the n-hexane cracking test (described in Journal of Catalysis, 4, 527-529 (1965) it exhibited an alpha-activity of 81.

EXAMPLE 4

A sample of the product of Example 2 was calcined and ion-exchanged in the manner described in Example 3. The ion-exchanged material contained less than 0.01 weight percent Na. Its n-hexane cracking activity (alpha) was 236.

This activity was about twice as high as expected from the overall alumina content, indicating that the shell of the ZSM-12 crystals contained about twice as much alumina as the chemical analysis of the bulk material showed.

Experiments made with the material of Example 4 demonstrated both the distillate selectivity and the high 450°C+ conversion capability of the low $SiO_2/Al_2O_3$ outer shell ZSM-12 zeolite.

EXAMPLE 5

A reaction mixture was prepared as described in Examples 1 and 2. It was aged for 66 hours at 50°C, then heated at 140°C for 50 hours and finally at 150°C for 22 hours. After that time the X-ray diffraction pattern of the crystals formed was that of ZSM-12 of 110 percent crystallinity compared with a reference sample. A solution of 40g of sodium aluminate in 100g of water was then added and heating continued for another 23 hours. After the addition, the crystallinity had dropped to 100 percent. At the end of the crystallization period, it was back at 110 percent.

The sorption capacities of the product, in g/100g of solid, were:

| | |
|---|---|
| Cyclohexane, 2.7 kPa | 7.2 |
| n-Hexane, 2.7 kPa | 6.6 |
| Water, 1.6 kPa | 6.5 |

The material contained 1.85 percent $Al_2O_3$, based on ignited weight, corresponding to a $SiO_2/Al_2O_3$ molar ratio of 87.

EXAMPLE 6

A sample of the product of Example 5 was calcined and ion-exchanged in the manner described in Example 3. The ion-exchanged material contained 0.02 percent Na. After being calcined for 3 hours at 540°C its n-hexane cracking activity was 132.

This activity was higher than that of the material of Example 3 and indicated that a thin aluminum-rich layer was formed on the crystals by reaction of the aluminate added with residual silicate in the mother liquor of the original crystallization. The increase in activity, however, was not as high as the increased alumina content would be expected to show. It appeared, therefore, that, considering the large excess of the added aluminate, some aluminum was deposited in a non-active form.

EXAMPLE 7

The inital reaction mixture was identical to that of Examples 1, 2 and 5. It was aged for 69 hours at 50°C, then heated at 160°C for crystallization. After 28 hours at that temperature, a crystallinity of 105 percent was found, compared with a reference sample. 19.5g sodium aluminate dissolved in 50g of water was added at that time and heating continued for another 24 hours.

The crystals formed had the X-ray diffraction patterns of ZSM-12, with a crystallinity of 100 percent. Their sorption capacities, in g/100g of solid, were:

| | |
|---|---|
| Cyclohexane, 2.7 kPa | 6.4 |
| n-Hexane, 2.7 kPa | 6.4 |
| Water, 1.6 kPa | 5.9 |

The material contained 1.8 percent $Al_2O_3$, based on ignited weight, corresponding to a $SiO_2/Al_2O_3$ molar ratio of 92.

EXAMPLE 8

A sample of the product of Example 7 was calcined and ion-exchanged in the manner described in Example 3. The residual sodium content was 0.03 percent. After being calcined at 540°C for 3 hours in air, its n-hexane cracking activity was 135. Chemical analysis and alpha-activity indicated that a thin aluminum-rich shell similar to that of Examples 5 and 6 was formed and that part of the Al was inactive.

Although the aluminum-rich outer shell contributed disproportionately more to the n-hexane cracking activity than the core, it was recognized that the core, especially if it contained substantial amounts of aluminum, also contributed to the activity. The core aluminum was expected to contribute considerably less to the cracking of larger molecules that diffuse less readily through the pore structure of the zeolite.

EXAMPLE 9

The procedure of Example 2 was repeated. The product had 100 percent crystallinity and contained 2.1 percent $Al_2O_3$, based on ignited weight, the $SiO_2/Al_2O_3$ molar ratio being 78.

EXAMPLE 10

A sample of the product of Example 9 was calcined and ion-exchanged in the manner described in Example 3. The ion-exchanged material contained 0.01 percent residual Na. After being calcined for 3 hours at 540°C in air, the product had an n-hexane cracking activity of 252.

## EXAMPLE 11

8.3g sodium hydroxide was dissolved in 110g of water; 8.7g boric acid was then added and dissolved. 264g colloidal silica sol (30 percent $SiO_2$) was then added, followed by a solution of 17.7g of tetrapropylammonium bromide dissolved in 33.3g of water. This mixture was then poured into a well-dispersed slurry of 300g of aluminosilicate ZSM-5 ($SiO_2/Al_2O_3$ molar ratio of 72, apparent crystallinity 115%) in 700g of water. The mixture was then heated at 160°C for crystallization.

After 46 hours at this temperature, the crystallinity was 135 percent; this relatively high value was attributable to the fact that the x-ray diffraction pattern of borosilicate ZSM-5 always exhibits a higher apparent crystallinity than aluminosilicate ZSM-5. The sorption capacity of the product was, in g/100g of solid:

| | |
|---|---|
| Cyclohexane, 2.7kPa | 4.4 |
| n-Hexane, 2.7kPa | 11.1 |
| Water, 1.6kPa | 6.0 |

Its chemical composition was, in weight percent:

| | |
|---|---|
| $SiO_2$ | 85.24 |
| $Al_2O_3$ | 1.8 |
| $B_2O_3$ | 0.42 |
| $Na_2O$ | 0.53 |
| N | 0.92 |
| Ash | 88.39 |

from which the following molar ratios were derived:

| | |
|---|---|
| $SiO_2/(Al_2O_3+B_2O_3)$ | 60.0 |
| $B_2O_3/(Al_2O_3+B_2O_3)$ | 0.25 |

CLAIMS

1. A crystalline material having a constraint index from 0.4 to 12 comprising a core of a crystalline metallosilicate having a silica/trivalent metal oxide mole ratio greater than 12 and when the trivalent metal therein is aluminum, less than 200, enveloped by a shell of an isocrystalline metallosilicate having a composition differing from that of the core and when the shell is an aluminosilicate, having a silica/trivalent metal oxide mole ratio lower than that of the core.

2. A material according to claim 1, in which at least one of the core and shell is a metallosilicate other than an aluminosilicate.

3. A material according to claim 1 or claim 2, in which one of the core and shell is an aluminosilicate and the other is a metallosilicate other than an aluminosilicate.

4. A material according to any one of claims 1 to 3, in which the core is an aluminosilicate and the shell is a gallosilicate, chromosilicate, ferrosilicate or borosilicate.

5. A material according to claim 1, in which both the core and the shell are aluminosilicates.

6. A material according to any one of claims 1 to 5, which has the x-ray diffraction pattern of ZSM-5, ZSM-11, ZSM-23, ZSM-35 or ZSM-38.

7. A material according to any one of claims 1 to 5, which has the x-ray diffraction pattern of ZSM-12.

8. A method for the manufacture of a crystalline material according to any one of claims 1 to 7, which comprises forming a reaction mixture containing sources of silica, trivalent metal oxide, alkali metal and water and optionally an organonitrogen cation and having a composition suitable for the formation of the metallosilicate shell under appropriate conditions of temperature and pressure, and containing also crystals of the core material, and maintaining the reaction mixture under crystallization conditions until an enveloping shell has crystallized on the crystals of core material.

9. A method according to claim 8, wherein the reaction mixture is formed and crystals of preformed core material are added to it.

10. A method according to claim 8, wherein a reaction mixture containing sources of silica, trivalent metal oxide, alkali metal and water and optionally an organonitrogen cation and having a composition suitable for the formation of the metallosilicate core under appropriate conditions of temperature and pressure is formed and maintained under crystallization conditions until crystallization of the core material is from 20 to 90% complete, additional sources of one or more such ingredients and/or of one or more further ingredients are then added to the remaining reaction mixture to form a new reaction mixture having a composition suitable for the formation of the metallosilicate shell under appropriate conditions of temperature and pressure, and that reaction mixture is maintained under crystallization conditions until an enveloping shell has crystallized on the crystals of core material.

11. A method according to claim 10, wherein both core and shell are aluminosilicates and a source of alumina is added to the reaction mixture after crystallization of the core material is from 20 to 90% complete.

European Patent Office

# EUROPEAN SEARCH REPORT

0118632
Application number

EP 83 30 1389

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | EP-A-0 055 044 (EXXON)<br>* Claims 1-4, 9, 12 *<br>--- | 1-9 | C 01 B 33/28<br>B 01 J 29/04 |
| D,A | US-A-4 112 056 (N.Y. CHEN et al.)<br>--- | | |
| D,A | GB-A-2 097 374 (CHEVRON)<br>--- | | |
| D,A | US-A-4 203 869 (L.D. ROLLMANN)<br>--- | | |
| A | US-A-4 217 240 (H.E. BERGNA)<br>--- | | |
| A | US-A-4 235 753 (S.M. BROWN et al.)<br>--- | | TECHNICAL FIELDS SEARCHED (Int. Cl. 3) |
| A | DE-A-1 934 611 (TEXACO)<br>----- | | C 01 B 33/00<br>B 01 J 20/00<br>B 01 J 29/00 |

The present search report has been drawn up for all claims

| Place of search | Date of completion of the search | Examiner |
|---|---|---|
| BERLIN | 14-11-1983 | KESTEN W |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document